# EUROPEAN PATENT APPLICATION

(11) **EP 3 358 330 A2**
(43) Date of publication of application: **08.08.2018**
(21) Application number: 18154609.4
(22) Date of filing: 01.02.2018
(51) Int. Cl.: G01L 19/00, G01L 19/08, G01F 23/00

(54) **WATER LEVEL GAUGE, WATER PRESSURE SENSOR DEVICE, AND WATER LEVEL MEASUREMENT SYSTEM**

(30) Priority: 03.02.2017 JP 2017018967
(71) Applicant: Yokogawa Electric Corporation, Tokyo 180-8750 (JP)
(72) Inventor: YOSHIDA, Yusaku, Musashino-shi, Tokyo 180-8750 (JP); ARAI, Takashi, Musashino-shi, Tokyo 180-8750 (JP); SUNAKAWA, Hirokatsu, Musashino-shi, Tokyo 180-8750 (JP); NODA, Ryuichiro, Musashino-shi, Tokyo 180-8750 (JP)
(74) Representative: Grünecker Patent- und Rechtsanwälte PartG mbB

(57) **Abstract**

A water pressure sensor device according to one aspect of the present invention includes a water pressure sensor installed in water and configured to measure an absolute value of water pressure at an installation position of the water pressure sensor, and a wireless communicator installed on the ground and configured to transmit a wireless signal indicating the absolute value of the water pressure measured by the water pressure sensor.

## Description

### BACKGROUND OF THE INVENTION

### Field of the Invention

The present invention relates to a water level gauge, a water pressure sensor device, and a water level measurement system.

The present application claims priority based on Japanese patent application 2017-18967, filed on February 3, 2017 and includes herein by reference the content thereof.

### Description of Related Art

A pressure type water level gauge has been known in which a water pressure detector installed in water to detect water pressure and a converter which calculates a water level on the basis of the water pressure detected by the water pressure detector are integrally provided (see Japanese Patent Publication No. 3463728 and Japanese Patent Publication No. 5696181).

A central portion of this water pressure detector is partitioned by a diaphragm. In the water pressure detector, water pressure is applied to a lower surface of the diaphragm, and an atmospheric pressure is applied to an upper surface via an atmospheric pressure introduction tube. Therefore, the water pressure detector detects a pressure difference in the diaphragm, converts the detected differential pressure into an electric signal, and inputs it to the converter via a signal line. This signal line electrically connects the water pressure detector and the converter.

The atmospheric pressure introduction tube is embedded in a single cable together with the signal line. The inside of the water pressure detector and the inside of the converter communicate with each other through this atmospheric pressure introduction tube. Therefore, since the inside of the converter is open to the atmosphere, the atmospheric pressure is transmitted to the inside of the water pressure detector via the atmospheric pressure introduction tube.

### SUMMARY

As described above, in the water level gauge in the related art, since an inside of a converter is open to the atmosphere, moisture easily intrudes into the inside of the converter and an inside of a water pressure detector from the inside of the converter via an atmospheric pressure introduction tube. Therefore, due to the moisture, there are some cases in which circuit boards used inside the converter or inside the water pressure detector corrode, or electronic parts cause a problem such as a short circuit. Therefore, in order to prevent humidity from intruding into the converter, it is necessary to perform a countermeasure of providing a filter connived with a drying material such as silica gel, or a countermeasure in which a moisture-proof coating is applied on the boards to prevent corrosion of the circuit boards, resulting in a high cost. Since the inside of the converter is open to the atmosphere, there arc some cases in which a corrosive gas intrudes into the inside of the converter. Therefore, a countermeasure to protect internal parts from the corrosive gas is also required.

One aspect of the present invention provides a water level gauge, a water pressure sensor device, and a water level measurement system which are capable of preventing a problem due to corrosion or the like and reducing costs. Furthermore, the water level gauge, the water pressure sensor device, and the water level measurement system can be miniaturized and improve measurement accuracy.

A water pressure sensor device according to a first aspect of the present invention may include a water pressure sensor installed in water and configured to measure an absolute value of water pressure at an installation position of the water pressure sensor, and a wireless communicator installed on the ground and configured to transmit a wireless signal indicating the absolute value of the water pressure measured by the water pressure sensor.

The above-described water pressure sensor device may further include a power supply device configured to supply power to each part of the water pressure sensor device. The power supply device and the wireless communicator may be provided in a single housing and installed on the ground.

In the above described water pressure sensor device, the wireless communicator and the water pressure sensor may be connected to each other only by electrical wiring. The housing may have an airtight structure.

In the above-described water pressure sensor device, the water pressure sensor may include a diaphragm, a vacuum reference chamber provided on an upper surface of the diaphragm, and a resonant sensor. The diaphragm may be deformed by a differential pressure between reference pressure in the vacuum reference chamber and water pressure of water which is a measurement target, the upper surface of the diaphragm being subjected to the reference pressure, a lower surface of the diaphragm being subjected to the water pressure. The resonant sensor may be configured to measure the absolute value of the water pressure by measuring an amount of deformation of the diaphragm.

The above-described water pressure sensor device may further include a power supply controller configured to measure remaining power of the power supply device and input a battery exhaustion signal indicating battery exhaustion into the wireless communicator in a case that the measured remaining power is less than a predetermined amount of power.

The above-described water pressure sensor device may further include a temperature measurer configured to measure a temperature of the wireless communicator and transmit a warning signal indicating the measured temperature or abnormality to an outside of the water pressure sensor device in a case that the measured temperature is equal to or greater than a predetermined temperature.

A water level gauge according to a second aspect of the present invention may include a first communicator configured to receive a first wireless signal indicating an absolute value of water pressure from a water pressure sensor device capable of measuring the absolute value of the water pressure, and a water level calculator configured to calculate a water level on the basis of the absolute value of the water pressure indicated by the first wireless signal received by the first communicator and an atmospheric pressure measured by a barometer.

The above-dcscribed water level gauge may further include a second communicator configured to transmit a second wireless signal indicating the water level calculated by the water level calculator to an outside of the water level gauge.

In the above-described water level gauge, the water level calculator may be configured to calculate the water level on the basis of a difference between the absolute value of the water pressure and the atmospheric pressure, and a water density of water which is measurement target.

In the above-described water level gauge, the first communicator may be configured to receive, from each of a plurality of water pressure sensor devices, the first wireless signal and identification information for identifying each of the plurality of water pressure sensor devices. The water level calculator may be configured to calculate the water level for each identification information.

A water level measurement system according to a third aspect of the present invention may include at least one water pressure sensor device described above, a barometer configured to measure an atmospheric pressure, and a water level gauge connected to the water pressure sensor device wirelessly and connected to the barometer wirelessly or by wire. The water level gauge may be configured to calculate a water level on the basis of the absolute value of the water pressure indicated by the first wireless signal acquired from the water pressure sensor device wirelessly and the atmospheric pressure acquired from the barometer wirelessly or by wire.

The above-described water level measurement system may further include an information processing device configured to transmit and receive information to and from the water level gauge via a network, the information processing device including a controller configured to input an alarm into an external device in a case that the water level acquired from the water level gauge via the network exceeds a predetermined value.

In the above-described water level measurement system, the water level gauge may be configured to transmit a second wireless signal indicating the calculated water level to an outside of the water level gauge.

In the above-described water level measurement system, the water level gauge may be configured to calculate the water level on the basis of a difference between the absolute value of the water pressure and the atmospheric pressure, and a water density of water which is measurement target.

In the above-described water level measurement system, the water level gauge may be configured to receive, from each of a plurality of water pressure sensor devices, the first wireless signal and identification information for identifying each of the plurality of water pressure sensor devices and calculate the water level for each identification information.

According to the one aspect of the present invention described above, it is possible to prevent a problem due to corrosion or the like and reduce costs. Furthermore, it is possible to realize the miniaturization of the device and improve measurement accuracy.

### BRIEF DESCRIPTION OF THE DRAWINGS

FIG. 1 is a view showing an example of a schematic configuration of a water level measurement system 1 using a water level gauge gateway 4 according to one embodiment of the present invention.
FIG. 2 is a view for describing an arrangement example of a water pressure sensor device 2 according to one embodiment of the present invention.
FIG. 3 is a schematic structural view showing a structure of a water pressure sensor 21 according to one embodiment of the present invention.
FIG. 4 is a view showing an example of a schematic configuration of a water pressure sensor wireless communicator 22 according to one embodiment of the present invention.
FIG. 5 is a view showing an example of a schematic configuration of the water level gauge gateway 4 according to one embodiment of the present invention.
FIG. 6 is a view showing an example of a schematic configuration of a cloud server 6 according to one embodiment of the present invention.
FIG. 7 is a view showing a display example in which a controller 62 according to the embodiment of the present invention displays a water level h on a display 64.
FIG. 8 is a sequence diagram of the water level measurement system 1 according to one embodiment of the present invention.

### DETAILED DESCRIPTION OF THE INVENTION

Hereinafter, the present invention will be described through embodiments of the present invention, but the scope of the present invention is not limited to the following embodiments. All of the combinations of features described in the embodiments are not necessarily essential to solutions of the invention. In the drawings, the same or similar parts are denoted by the same reference signs and duplicated descriptions thereof may be omitted. Shapes and sizes of the elements in the drawings may be exaggerated for a clearer explanation.

Throughout the specification, when a certain part "includes," "has" or "comprises" a certain constituent element, this does not mean that it excludes other constituent elements unless specifically stated to the contrary, and it can further include other constituent elements.

Hereinafter, a water level gauge according to one embodiment of the present invention will be described with reference to the drawings.

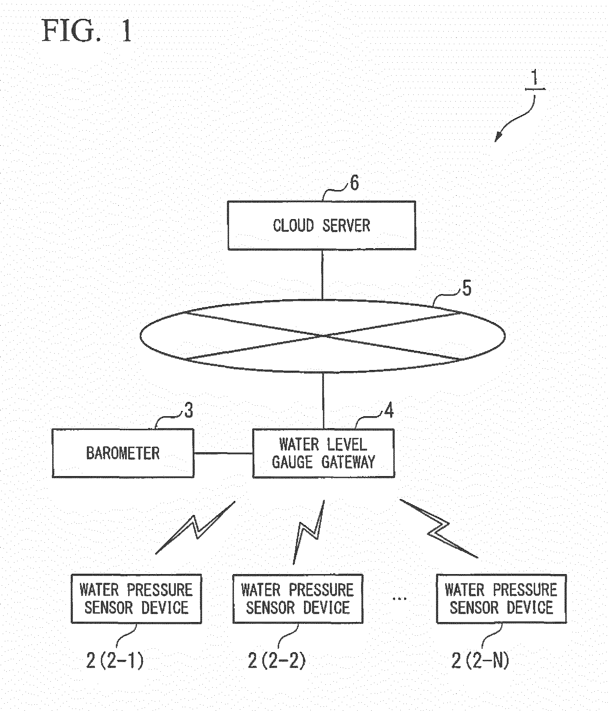

FIG. 1 is a view showing an example of a schematic configuration of a water level measurement system 1 using a water level gauge gateway 4 according to one embodiment of the present invention. As shown in FIG. 1, the water level measurement system 1 includes a plurality of water pressure sensor devices 2 (2-1, 2-2, ···, 2-N (N is an integer of 1 or more)), a barometer 3, the water level gauge gateway 4 and a cloud server 6. The water level measurement system 1 according to the present embodiment may include one or more water pressure sensor devices 2. The cloud server 6 may be an example of an "information processing device" in the present invention. The water level gauge gateway 4 may be an example of a "water level gauge" in the present invention.

The cloud server 6 is a server built in a cloud environment and is a server which is based on a premise that it is used via a network such as the Internet. The cloud server 6 is formed with one or a plurality of electronic devices, terminal devices, servers, general-purpose personal computers, or the like which constitute cloud computing. Cloud computing is defined in a definition of cloud computing (SP 800-145), URL: https://www.ipa.go.jp/files/000025366.pdf by the National Institute of Standards and Technology (NIST).

Each of the water pressure sensor devices 2-1, 2-2, ···, 2-N indicates an individual water pressure sensor device and has the same configuration. When the water pressure sensor devices 2-1, 2-2, ···, 2-N are not distinguished, they are simply referred to as the "water pressure sensor device 2." A water pressure sensor device connected to the water level gauge gateway 4 may have a configuration other than that of the water pressure sensor devices 2-1, 2-2, ···, 2-N.

The water pressure sensor device 2 transmits and receives information by wirelessly communicating with the water level gauge gateway 4.

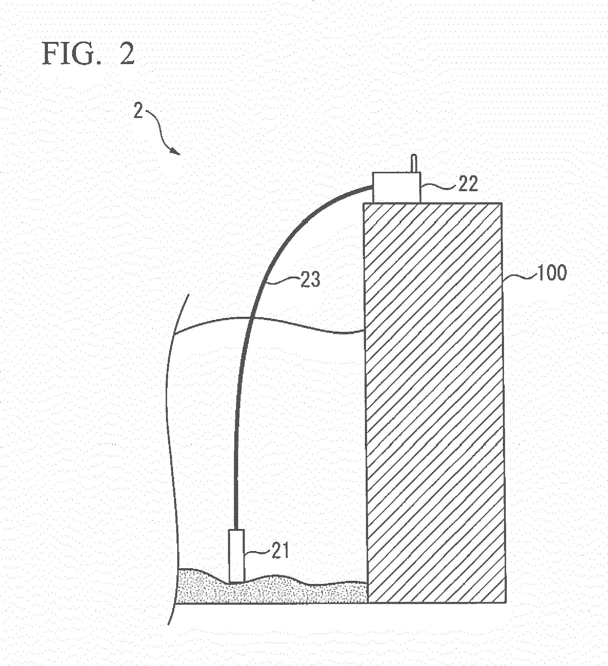

As shown in FIG. 2, the water pressure sensor device 2 includes a water pressure sensor 21, a water pressure sensor wireless communicator 22, and a signal line 23.

The water pressure sensor 21 is installed in water. The water pressure sensor 21 measures an absolute value of water pressure at an installation position which is a position at which it is installed in the water. The water pressure sensor 21 inputs the absolute value of the obtained water pressure as an electric signal into the water pressure sensor wireless communicator 22.

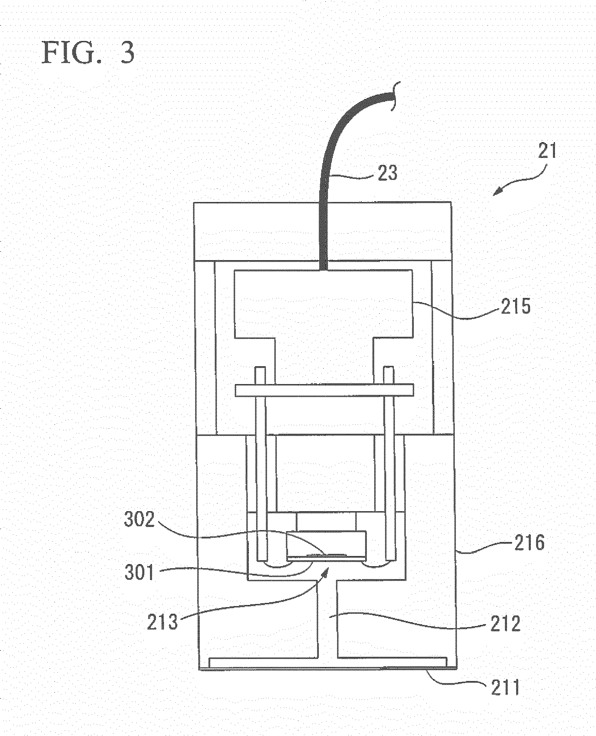

FIG. 3 is a schematic structural view showing a structure of the water pressure sensor 21 according to one embodiment of the present invention.

The water pressure sensor 21 includes a seal diaphragm 211, a pressure transmitting sealing liquid 212, a sensor chip 213, a resonant sensor (not shown), a temperature sensor (not shown), a signal processing unit 215 and a pressure-resistant container 216. The sensor chip 213 includes a diaphragm 301 and a vacuum reference chamber 302.

The seal diaphragm 211 is provided on the lower surface of the water pressure sensor 21. The lower surface of the seal diaphragm 211 is in water and is subjected to water pressure.

Between the upper surface of the seal diaphragm 211 and the lower surface of the diaphragm 301, the pressure transmitting sealing liquid 212 is filled. The pressure transmitting sealing liquid 212 is oil which transmits a pressure.

On the upper surface of the diaphragm 301, the vacuum reference chamber 302 is provided.

The inside of the vacuum reference chamber 302 has a structure capable of maintaining a vacuum state.

Therefore, the lower surface of the diaphragm 301 is subjected to water pressure Pw. The upper surface of the diaphragm 301 is subjected to a pressure Pa in the vacuum reference chamber 302.

The resonant sensor (not shown) is formed on the diaphragm 301.

The internal pressure of this vacuum reference chamber 302 is maintained at a sufficiently lower pressure than the water pressure to be measured.

On the diaphragm 301, a thermometer is formed in addition to the resonant sensor. This thermometer is used not only for temperature correction of the water pressure but also as a sensor for measuring a water temperature.

Hereinafter, a method of measuring a water pressure absolute value Pb in the water pressure sensor 21 will be described. When the water pressure sensor 21 is installed in water, the lower surface of the seal diaphragm 211 is subjected to the water pressure Pw. The water pressure Pw received by the lower surface of the seal diaphragm 211 is transmitted to the lower surface of the diaphragm 301 by the pressure transmitting sealing liquid 212. In this case, the diaphragm 301 is subjected to the pressure Pa inside the vacuum reference chamber 302 on the upper surface and the water pressure Pw on the lower surface. Therefore, the diaphragm 301 is deformed by a differential pressure between the water pressure Pw and the pressure Pa. This amount of deformation caused by the pressure is proportional to the water pressure when the pressure in the vacuum reference chamber 302 is constant. The water pressure sensor 21 can measure the water pressure absolute value Pb by measuring this amount of deformation of the diaphragm with the resonant sensor disposed on the diaphragm.

The resonant sensor includes, for example, a crystal resonator. The crystal resonator, which is used while resonating a crystal, detects the amount of deformation based on the characteristics of the crystal in which the resonance frequency is changed by external forces. The state of the resonator disposed on the diaphragm is changed by the external forces and thereby the frequency output of the resonant sensor is changed. The resonant sensor detects the amount of deformation of the diaphragm based on the change in the frequency output.

The amount of deformation of the diaphragm 301 detected by the resonant sensor is converted by the signal processing unit 215 into an analog output, then the analog signal is digitized, and thereby the water pressure is calculated by arithmetic processing of the signal. The temperature correction is also performed by the signal processing unit 215. The signal processing unit 215 inputs the measured water pressure absolute value Pb into the water pressure sensor wireless communicator 22 via the signal line 23. A gauge sensor may be used instead of the resonant sensor.

As described above, the water pressure sensor device 2 has a configuration of measuring a so-called absolute pressure of water pressure, not a configuration of measuring a gauge pressure of water pressure with reference to an atmospheric pressure as in the related art. As a result, the water pressure sensor device 2 according to the present embodiment does not require wiring in which an expensive atmospheric pressure introduction tube is embedded or the like. Therefore, it is possible to reduce the cost of the water pressure sensor device 2. The water pressure sensor 21 need only be able to measure the water pressure absolute value Pb, and is not particularly limited to the above-described structure. For example, the water pressure sensor 21 may measure the water pressure absolute value Pb by ultrasonic waves or the like.

The signal line 23 connects the water pressure sensor 21 and the water pressure sensor wireless communicator 22, and transmits signals and electric power.

The water pressure sensor wireless communicator 22 is installed on the ground 100 such as at a small observation post.

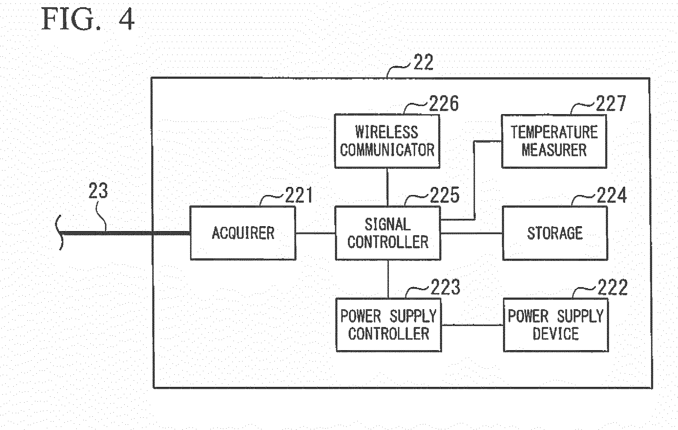

FIG. 4 is a view showing an example of a schematic configuration of the water pressure sensor wireless communicator 22 according to one embodiment of the present invention.

As shown in FIG. 4, the water pressure sensor wireless communicator 22 includes an acquirer 221, a power supply device 222, a power supply controller 223, a storage 224, a signal controller 225, a wireless communicator 226, and a temperature measurer 227. The acquirer 221, the power supply device 222, the power supply controller 223, the storage 224, the signal controller 225, the wireless communicator 226, and the temperature measurer 227, which are respective parts of the water pressure sensor wireless communicator 22, are accommodated in the same housing and provided on the ground 100. The housing has an airtight structure.

The acquirer 221 is connected to the signal line 23. The acquirer 221 acquires the water pressure absolute value Pb from the water pressure sensor 21 via the signal line. The acquirer 221 inputs the acquired water pressure absolute value Pb into the signal controller 225.

The power supply device 222 supplies power to each part of the water pressure sensor device 2. That is, the power supply device 222 supplies power to each part of the water pressure sensor wireless communicator 22 and also supplies power to the water pressure sensor 21 via the signal line 23. As the power supply device 222, a nickel hydrogen battery or a lithium ion battery can be used. The battery may be a primary battery or a secondary battery. Instead of a battery, an electric double layer capacitor (condenser) can be used for the power supply device 222. As described above, since the water pressure sensor device 2 is driven by the embedded power supply device 222, there is no need for it to be wired to the outside to obtain power. Therefore, the water level measurement can be realized merely by fixing the water pressure sensor 21 and installing the water pressure sensor wireless communicator 22. Consequently, unnecessary wiring or the like is not necessary and installation costs can be significantly reduced.

The power supply controller 223 controls an amount of power output from the power supply device 222. The power supply controller 223 measures a remaining value of power (hereinafter referred to as "remaining power") stored in the power supply device 222. When the measured remaining power of the power supply device 222 is less than a predetermined amount of power, the power supply controller 223 inputs a battery exhaustion signal indicating battery exhaustion into the signal controller 225. However, in regards to this value of the remaining power amount, a method of measuring a voltage by the signal controller 225 can also be used.

The temperature measurer 227 incorporates a temperature sensor and monitors a temperature of the water pressure sensor wireless communicator 22. By monitoring the temperature of the water pressure sensor wireless communicator 22, the temperature measurer 227 quickly senses a cause of a fire accident due to battery leakage, a short circuit, or the like, and generates a control signal for shutting off the power supply device 222. The temperature and the control signal are transmitted to the signal controller 225. For example, when a temperature measured by the temperature sensor is determined to be equal to or greater than a value indicating abnormality, the temperature measurer 227 transmits a warning signal indicating the temperature or abnormality to the cloud server 6 via the water level gauge gateway 4. The cloud server 6 inputs a warning signal indicating the temperature and abnormality acquired from the water pressure sensor wireless communicator 22 via the water level gauge gateway 4 into a communication terminal owned by a user. Thereby, the water pressure sensor device 2 can promptly inform the user of danger of fire in the water pressure sensor wireless communicator 22. After transmitting the warning signal to the cloud server 6, the signal controller 225 may electrically shut off the power supply device 222 from the water pressure sensor wireless communicator 22 on the basis of the control signal output from the temperature measurer 227. The signal controller 225 may generate a warning signal on the basis of the control signal.

The storage 224 stores identification information for identifying each individual device of the water pressure sensor devices 2 from the plurality of water pressure sensor devices 2 (2-1, 2-2, ···, 2-N).

The signal controller 225 assigns the identification information stored in the storage 224 to the water pressure absolute value Pb acquired from the acquirer 221. The signal controller 225 wirelessly transmits the water pressure absolute value Pb to which the identification information has been assigned to the water level gauge gateway 4 via the wireless communicator 226. The signal controller 225 wirelessly transmits the battery exhaustion signal acquired from the power supply controller 223 to the water level gauge gateway 4 via the wireless communicator 226. In that case, the signal controller 225 assigns identification information stored in the storage 224 to the battery exhaustion signal and wirelessly transmits it to the water level gauge gateway 4.

The wireless communicator 226 wirelessly communicates with the water level gauge gateway 4. The communication line in this wireless communication includes a computer network such as the Internet, a core network of communication carriers, and various local networks. For example, the wireless communicator 226 may use a low-power wide-area network (LPWAN), may use WiFi (registered trademark), or may use ZigBee (registered trademark) which is a short distance wireless communication standard, or the like. When the LPWAN, ZigBee (registered trademark) or the like which is a wireless communication system with low power consumption is employed as a wireless communication system of the water pressure sensor wireless communicator 22, since a life span of the battery can extend and the number of battery replacements can be reduced, maintenance cost can be reduced.

In addition to the above-described functions, the signal controller 225 may have a role including simple filtering and statistical processing.

Returning to FIG. 1, the barometer 3 is connected to the water level gauge gateway 4 by wire or wirelessly. The barometer 3 measures an atmospheric pressure. This barometer 3 has the same structure as the water pressure sensor 21. That is, the barometer 3 includes the vacuum reference chamber 302 and a pressure sensor 214, and measures an atmospheric pressure Pat with reference to the pressure Pa in the vacuum reference chamber 302. The barometer 3 transmits the measured atmospheric pressure Pat to the water level gauge gateway 4 by wire or wirelessly.

The water level gauge gateway 4 is wirelessly connected to at least one or more water pressure sensor devices 2 and is connected to the barometer 3 wirelessly or by wire. The water level gauge gateway 4 transmits and receives information to and from the cloud server 6 via a communication network 5. This communication network 5 may be a transmission path of wireless communication or a combination of a transmission path of wireless communication and a transmission path of wired communication. The communication network 5 includes a computer network such as the Internet, a core network of communication carriers, and various local networks. For example, the communication network 5 may be a wireless communication network of a mobile communication system such as a 3G system, a Long Term Evolution (LTE) system, a 4G system or the like, and may be a wireless communication network of a wireless data communication system including a wireless metropolitan area network (MAN) system such as WiMAX (registered trademark), a wireless WAN system or the like.

The water level gauge gateway 4 functions as a repeater relaying information transmitted from the water pressure sensor device 2 or the barometer 3 to the cloud server 6. For example, the water level gauge gateway 4 functions as a gateway.

The water level gauge gateway 4 calculates a water level h for each piece of identification information on the basis of the water pressure absolute value Pb wirelessly acquired from the wireless communicator 226 of the water pressure sensor wireless communicator 22 and the atmospheric pressure Pat acquired from the barometer 3 wirelessly or by wire. For example, the water level gauge gateway 4 calculates the water level h for each of the water pressure sensor devices 2-1, 2-2, ···, 2-N. The water level gauge gateway 4 transmits the water level h calculated for each piece of identification information to the cloud server 6 via the communication network 5. The information of the water level h to be transmitted to the cloud server 6 is assigned the identification information of the water pressure sensor device 2 corresponding to the water level h.

A water temperature and a battery voltage for each of the water pressure sensor devices 2-1, 2-2, ···, 2-N and information inside the water pressure sensor wireless communicator 22 are also transmitted to the cloud server 6 via the communication network.

The configuration of the water level gauge gateway 4 according to one embodiment of the present invention will be described below.

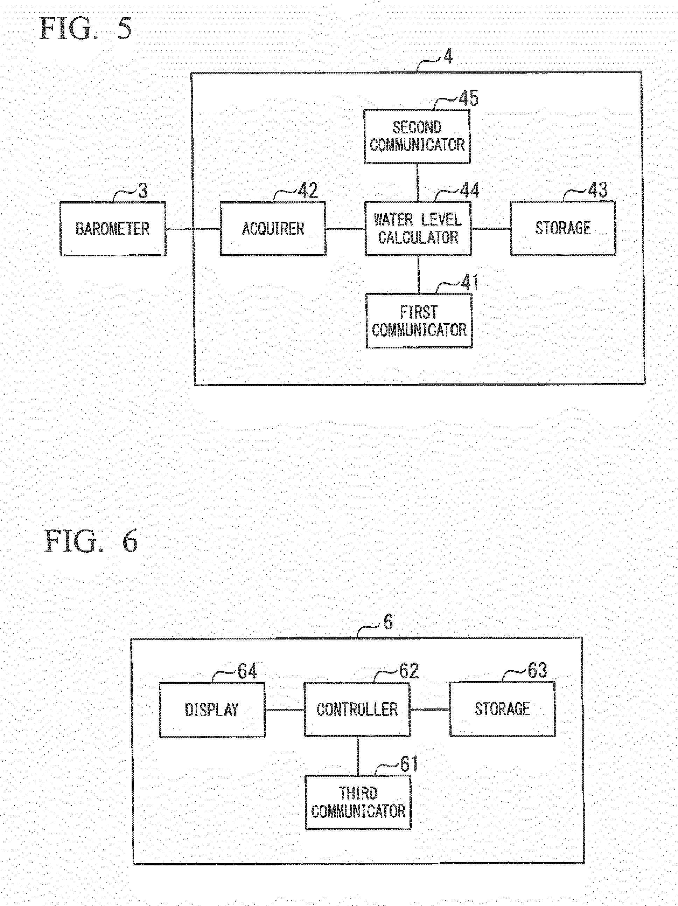

As shown in FIG. 5, the water level gauge gateway 4 includes a first communicator 41, an acquirer 42, a storage 43, a water level calculator 44, and a second communicator 45.

The acquirer 42 is connected to the barometer 3 by wire or wirelessly. The acquirer 42 acquires the atmospheric pressure Pat from the barometer 3. The acquirer 42 inputs the atmospheric pressure Pat acquired from the barometer 3 into the water level calculator 44.

The first communicator 41 communicates with the wireless communicator 226 of the water pressure sensor device 2.

The water level calculator 44 calculates the water level h for each piece of identification information on the basis of a difference between the atmospheric pressure Pat acquired from the acquirer 42 and the water pressure absolute value Pb received by the first communicator 41 from the water pressure sensor device 2 (the wireless communicator 226), and the density ρ of water. Data and programs used for calculating the water level h such as the density ρ are stored in the storage 43 in advance.

Since the water density p, thermal expansion of the water pressure sensor, thermal expansion of the sealing liquid, and the like have temperature dependence, the water level calculator 44 may perform temperature correction also taking this temperature dependence into consideration.

The water level calculator 44 acquires the battery exhaustion signal from the wireless communicator 226 via the first communicator 41. The water level calculator 44 transmits the battery exhaustion signal to the cloud server 6 via the second communicator 45. The water level gauge gateway 4 repeatedly executes this calculation of the water level h at regular time intervals and transmits the calculated water level h to the cloud server 6.

In the storage 43, long-term measurement data in a specified capacity is stored as a backup of the measurement data. When the specified amount of data is reached, old data is erased and new data is stored in the storage 43. This data can be used as a backup when some data in the cloud is missing.

The water level calculator 44 has a statistical processing function of the water level and temperature for each of the water pressure sensor devices 2-1, 2-2, ···, 2-N and also has a statistical processing function of a cross correlation, average value, and the like among the water pressure sensor devices 2-1, 2-2, ···, 2-N.

The second communicator 45 communicates with the cloud server 6 via the communication network 5.

The cloud server 6 transmits and receives information to and from the water level gauge gateway 4 via the communication network 5.

Hereinafter, a configuration of the cloud server 6 according to one embodiment of the present invention will be described.

As shown in FIG. 6, the cloud server 6 includes a third communicator 61, a controller 62, a storage 63, and a display 64.

The third communicator 61 transmits and receives information to and from the second communicator 45 of the water level gauge gateway 4 via the communication network 5.

The controller 62 stores the water level h, the water temperature, and the temperature of the water pressure sensor wireless communicator 22 which are acquired from the second communicator 45 of the water level gauge gateway 4 via the third communicator 61 in the storage 63. For example, the controller 62 acquires the water level h, the water temperature, and the temperature of the water pressure sensor wireless communicator 22 from the second communicator 45 of the water level gauge gateway 4 via the third communicator 61 at regular time intervals. The controller 62 stores the water level h, the water temperature, and the temperature of the water pressure sensor wireless communicator 22 which are acquired at regular time intervals in the storage 63 in time series. In this case, the controller 62 may store the water level h, the water temperature, and the temperature of the water pressure sensor wireless communicator 22 in the storage 63 in time series and for each piece of identification information. That is, the water level h, the water temperature, and the temperature of the water pressure sensor wireless communicator 22 are stored in the storage 63 for each of the water pressure sensor devices 2-1, 2-2, ···, 2-N in time series. The controller 62 may collect the water levels h acquired at regular time intervals and create statistical data on the basis of the collected water levels h.

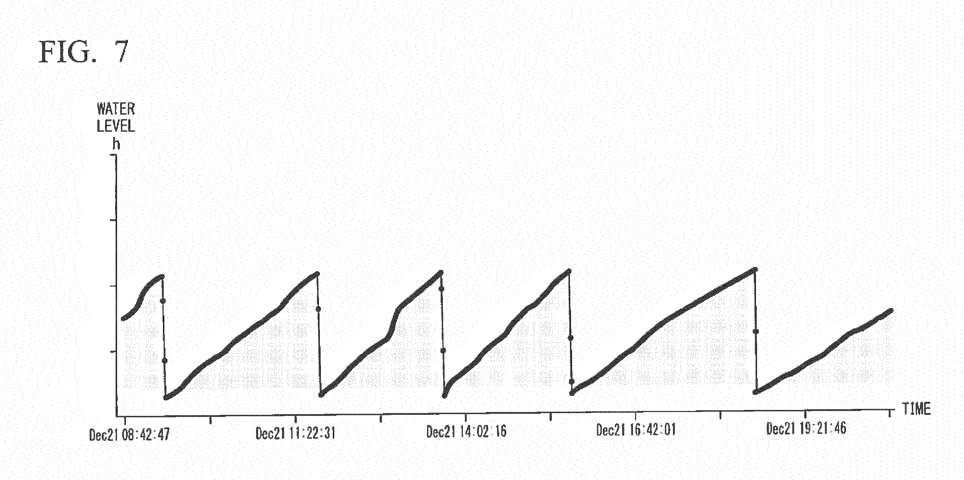

The controller 62 can display the water level h (FIG. 7), the water temperature, the temperature of the water pressure sensor wireless communicator 22 which are stored in the storage 63 in time series, and the statistical data of those measured values on the display 64.

The controller 62 executes a water level abnormality determination for determining whether or not the water level h acquired by the third communicator 61 via the communication network 5 exceeds a predetermined value. When the water level h used for determining the water level abnormality exceeds the predetermined value, the controller 62 inputs an alarm into an external device. For example, when the water level h used for water level abnormality determination exceeds the predetermined value, the controller 62 outputs a warning by sending a value of the water level h, warning text, or a sound to the communication terminal (external device) owned by the user. This warning text is, for example, content indicating that the water level h has reached the abnormal value, a website address in which details of the abnormality are described, or the like. The communication terminal may be any terminal that can communicate, and is, for example, a mobile phone such as a smartphone, a tablet terminal, a personal computer (PC), or the like. For example, the user is a person who monitors a water level of the water in which the water pressure sensor 21 is submerged.

As another embodiment, the controller 62 may execute the water level abnormality determination for determining whether or not the water level h acquired by the third communicator 61 via the communication network 5 is less than the predetermined value.

Similarly to the above description, also for water temperature abnormality, a threshold value can be set and a similar warning output can be output when the water temperature exceeds or falls below the threshold value.

After inputting the alarm into the communication terminal owned by the user, when the water level h acquired by the third communicator 61 via the communication network 5 is determined to be equal to or less than the predetermined value, the controller 62 may input to the communication terminal that the warning is canceled.

When the battery exhaustion signal is acquired by the third communicator 61 via the communication network 5, the controller 62 inputs a warning indicating that the remaining power of the power supply device 222 is insufficient into the communication terminal owned by the user. The controller 62 may input identification information assigned to the battery exhaustion signal together with this warning into the communication terminal owned by the user. Thereby, the user can identify the water pressure sensor device 2 in which the remaining power of the power supply device 222 is insufficient.

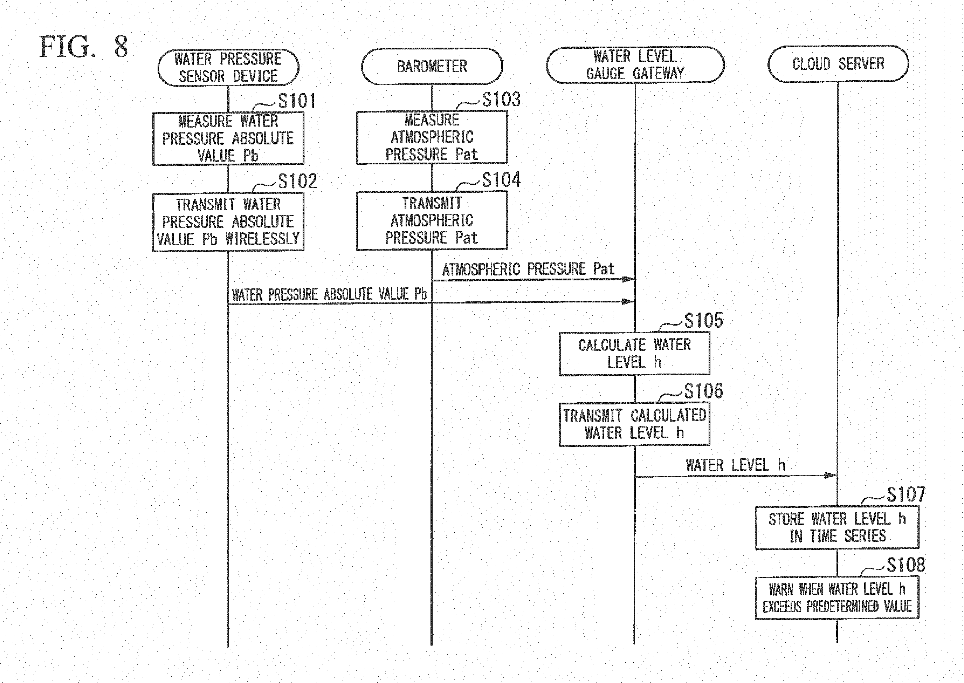

Hereinafter, an operation of the water level measurement system 1 using the water level gauge gateway 4 according to one embodiment of the present invention will be described with reference to FIG. 8.

The plurality of water pressure sensor devices 2 measure an absolute value PrePb of the water pressure and the water temperature at respective installation positions provided in the water, and calculate the water pressure absolute value Pb which is temperature-corrected using those measured values (step S101). Each of the plurality of water pressure sensor devices 2 assigns its own identification information to each of the measured water pressure absolute values Pb, and transmits it wirelessly to the water level gauge gateway 4 (step S102). In regards to the identification information and the water pressure data, as a case in which only the data is transmitted or the like after performing identification (ID) authentication at the time of communication establishment, the identification information does not necessarily need to be transmitted at the same time at which the data is transmitted, and any method may be used as long as it is a mechanism capable of discriminating the device identification information, the water pressure, and the temperature between the devices and transmitting them.

The barometer 3 measures the atmospheric pressure Pat with reference to the pressure Pa in its own vacuum reference chamber 302 (step S103). The barometer 3 transmits the measured atmospheric pressure Pat to the water level gauge gateway 4 by wire or wirelessly (step S104).

The water level gauge gateway 4 calculates the water level h for each piece of identification information on the basis of the water pressure absolute value Pb acquired from the wireless communicator 226 of the water pressure sensor wireless communicator 22 wirelessly and the atmospheric pressure Pat acquired from the barometer 3 wirelessly or by wire (step S 105). The water level gauge gateway 4 transmits the calculated water level h to the cloud server 6 via the communication network 5 (step S106).

The cloud server 6 stores the water level h acquired from the water level gauge gateway 4 via the communication network 5 in the storage 63 in time series and for each piece of identification information (step S107).

The cloud server 6 determines whether or not the water level h acquired via the communication network 5 exceeds the predetermined value. When the water level h acquired via the communication network 5 exceeds the predetermined value, the cloud server 6 inputs a warning into the communication terminal owned by the user (step S108). The cloud server 6 may also input the warning into the communication terminal owned by the user when the water level h acquired via the communication network 5 is equal to or less than the predetermined value.

As described above, the water level gauge gateway 4 according to one embodiment of the present invention includes the first communicator 41 which receives the water pressure absolute value Pb transmitted by a wireless signal from the water pressure sensor device 2 having the water pressure sensor 21 installed in water and capable of measuring the water pressure absolute value Pb at the installation position of the water pressure sensor 21 with reference to the pressure of the vacuum chamber (the vacuum reference chamber 302) in the water pressure sensor 21, and the water level calculator 44 which calculates the water level h on the basis of the water pressure absolute value Pb received by the above-described communication unit from the water pressure sensor device 2 and the atmospheric pressure Pat received from the barometer 3. Thereby, since the water level h can be calculated without using an atmospheric pressure introduction tube, the water level gauge gateway 4 can achieve high accuracy while reducing a cost as compared with a water level gauge in the related art. This water level gauge gateway 4 includes the second communicator 45 which transmits the water level h calculated by the water level calculator 44 to the outside with a wireless signal. This cost reduction also includes reduction in installation cost.

The water pressure sensor device 2 can wirelessly communicate with the water level gauge gateway 4 which calculates the water level on the basis of the water pressure absolute value Pb and the atmospheric pressure Pat, and is the water pressure sensor device for measuring the absolute value Pb of the water pressure h. The water pressure sensor device 2 includes the water pressure sensor 21 having the vacuum reference chamber 302 therein and measuring the water pressure absolute value Pb at a predetermined position with reference to the pressure of the vacuum reference chamber 302, and a wireless communicator 226 which wirelessly transmits the water pressure absolute value Pb measured by the water pressure sensor 21 to the water level gauge gateway 4. As described above, the water pressure sensor device 2 can be said to have a configuration of measuring a so-callcd absolute pressure of the water pressure, rather than a configuration in the related art in which a gauge pressure of the water pressure is measured with reference to the atmospheric pressure. Thereby, the water pressure sensor device 2 does not need wiring in which an expensive atmospheric pressure introduction tube is embedded or the like. Therefore, it is possible to reduce a cost of the water pressure sensor device 2. Further, since an inside of the water pressure sensor device 2 is not open to the atmosphere, moisture or a corrosive gas can be prevented from entering the inside of the water pressure sensor device 2. As a result, a countermeasure of providing a coating for moisture-proofing or for preventing corrosion on a circuit board inside the water pressure sensor device 2 is unnecessary, and thereby the cost is reduced.

The water pressure sensor device 2 includes the power supply device 222 which supplies power to each part of the own device. The power supply device 222 and the wireless communicator 226 are stored in the same housing as the water pressure sensor wireless communicator 22 and are provided on the ground 100. The water pressure sensor wireless communicator 22 is connected to the water pressure sensor 21 only by electrical wiring, and as described above, the atmospheric pressure introduction tube is not used. Therefore, since it is unnecessary to introduce the atmospheric pressure into the housing of the water pressure sensor wireless communicator 22, the cost of the water pressure sensor device 2 can be reduced and miniaturization of the water pressure sensor wireless communicator 22 can be realized.

Since it is not necessary to introduce the atmospheric pressure into the water pressure sensor wireless communicator 22, it is not necessary for the water pressure sensor device 2 to consider an influence of moisture. Therefore, it is unnecessary to perform a countermeasure of providing a filter connived with a drying material such as silica gel in the water pressure sensor wireless communicator 22, or a countermeasure in which a moisture-proof coating is applied on the board to prevent corrosion of the circuit board. As a result, the water pressure sensor device 2 has a lower cost than that in the related art.

In the water level measurement system in the related art, when measuring the water level h of a plurality of points in a river or the like, it is necessary to install a high cost water level gauge having the atmospheric pressure introduction tube at the plurality of points. On the other hand, in the water level measurement system 1 according to the present embodiment, it is possible to measure the water level h of a plurality of points by installing the low-cost water pressure sensor device 2 which does not use the atmospheric pressure introduction tube at the plurality of points, and merely by installing the barometer 3 according to the present embodiment and a repeater (for example, a gateway) having the function of the water level gauge gateway 4 according to the present embodiment in at least one point. Thereby, even when measuring the water level h at a plurality of points in a river or the like, the water level measurement system 1 can measure the water level h at a lower cost than in the past.

In the present embodiment, since a method of low power consumption is employed to the wireless communication of the water pressure sensor device 2, it is possible to operate with batteries. That is, a communication requiring large power consumption is processed by the water level gauge gateway 4 and commercial electricity is configured to be used for that portion, and thereby a life span of the batteries of the water pressure sensor device 2 can be improved and the number of battery replacements can be reduced. Therefore, a maintenance cost can be suppressed to be small. The installation cost can be reduced by employing a configuration with no wiring in the water pressure sensor device 2.

The present invention is not limited to the above-described embodiment, and the following modified examples can be considered, for example.
(1) The water level gauge gateway 4 may have a function of converting each of the atmospheric pressure Pat acquired from the barometer 3 and the water pressure absolute value Pb acquired from the water pressure sensor device 2 into highly accurate value by performing a statistical method (for example, including artificial intelligence (AI)) or digital filter processing such as infinite impulse response (IIR), finite impulse response (FIR), or the like.
(2) Since the barometer 3 can measure the atmospheric pressure Pat, it can sense the low pressure which causes rain. Therefore, the atmospheric pressure Pat measured by the barometer 3 can also be used for prediction of torrential rain caused by a local low pressure. For example, when generation of the low pressure is detected on the basis of the atmospheric pressure Pat acquired from the barometer 3, the water level gauge gateway 4 transmits a signal indicating the generation of the low pressure to the cloud server 6 via the communication network 5. When the signal indicating the generation of the low pressure is acquired from the water level gauge gateway 4, the cloud server 6 inputs information indicating the generation of the low pressure into the communication terminal owned by the user. In this manner, the water level gauge gateway 4 has a function of predicting weather by the short-term and local low pressure by sensing the low pressure from the atmospheric pressure Pat measured by the barometer 3.
(3) The wireless communicator 226 of the water pressure sensor wireless communicator 22 may transmit the remaining power of the power supply device 222 detected by the power supply controller 223 and position information indicating the position of its own device to the cloud server 6 via the water level gauge gateway 4. The cloud server 6 stores the position information, the identification information, the remaining power and the water level h in the storage 63 in association with each of the water pressure sensor devices 2-1, 2-2, ···, 2-N. The cloud server 6 may display positions corresponding to the position in formation of each of the water pressure sensor devices 2-1, 2-2, ···, 2-N on a map displayed on the display 64. For example, the water pressure sensor wireless communicator 22 may acquire the position information using the global positioning system (GPS).
(4) The water level measurement system I may have a plurality of water level gauge gateways 4, and information from the plurality of water level gauge gateways 4 may be collected by the cloud server 6. Thereby, the water level measurement system 1 can perform a statistical data analysis of the water level h in a wide area which cannot be realized with only one water level gauge gateway 4.
(5) It is possible to construct a water level measurement system with a configuration having only an upload function, and since it is possible to eliminate a mechanism of receiving instructions from an upper level side in such a configuration, there is no danger of virus infection at a portion installed at a site of a lower level than the water level gauge gateway 4.
(6) When the cloud side is made to have a mechanism that can calculate the water level with reference to a water level at a certain time so that the cloud side can convert it to a water level with reference to an output value at a specific time, it is unnecessary to have an adjustment portion at the time of installation at a portion to be installed at the site of a lower level than the water level gauge gateway 4. Thereby, even though adjustment is possible, the virus infection on the site side can be reduced.

A program for realizing all or a part of the functions of the water level measurement system 1 according to the above-described embodiment may be recorded in a computer-readable storage medium, and the program recorded in the storage medium may be read by a computer system and executed so that processing of each part may be performed. The "computer system" described herein includes an operating system (OS) and a hardware such as peripherals.

In a case in which the World Wide Web (WWW) system is used, the "computer system" includes a website providing environment (or display environment).

The "computer-readable storage medium" refers to a portable medium such as a flexible disk, a magneto-optical disk, or a compact disk, or a storage device such as a hard disk embedded in a computer system. Further, the "computer-readable storage medium" also includes one that holds programs dynamically for a short period of time such as a communication line in a case in which programs are transmitted via a network such as the Internet or a communication line such as a telephone line, and one that holds programs for a certain period of time such as volatile memories inside the computer system serving as a server or client in the above-described case. Further, the above-described program may be for realizing part of the above-described functions, and may be realized by combining the above-described function with a program already recorded in the computer system.

While embodiments of the present invention have been described in detail above with reference to the accompanying drawings, the specific configurations are not limited to the embodiments but may include design changes without departing from the spirit of the present invention.

## Claims

1. A water pressure sensor device comprising:
a water pressure sensor installed in water and configured to measure an absolute value of water pressure at an installation position of the water pressure sensor; and
a wireless communicator installed on the ground and configured to transmit a wireless signal indicating the absolute value of the water pressure measured by the water pressure sensor.

2. The water pressure sensor device according to Claim 1, further comprising:
a power supply device configured to supply power to each part of the water pressure sensor device,
wherein
the power supply device and the wireless communicator are provided in a single housing and installed on the ground.

3. The water pressure sensor device according to Claim 2, wherein
the wireless communicator and the water pressure sensor are connected to each other only by electrical wiring; and
the housing has an airtight structure.

4. The water pressure sensor device according to any one of Claims 1 to 3, wherein
the water pressure sensor comprises:
a diaphragm;
a vacuum reference chamber provided on an upper surface of the diaphragm; and
a resonant sensor,
wherein
the diaphragm is deformed by a differential pressure between reference pressure in the vacuum reference chamber and water pressure of water which is a measurement target, the upper surface of the diaphragm being subjected to the reference pressure, a lower surface of the diaphragm being subjected to the water pressure, and
the resonant sensor is configured to measure the absolute value of the water pressure by measuring an amount of deformation of the diaphragm.

5. The water pressure sensor device according to Claim 2 or Claim 3, further comprising:
a power supply controller configured to:
measure remaining power of the power supply device; and
input a battery exhaustion signal indicating battery exhaustion into the wireless communicator in a case that the measured remaining power is less than a predetermined amount of power.

6. The water pressure sensor device according to any one of Claims 1 to 5, further comprising:
a temperature measurer configured to:
measure a temperature of the wireless communicator; and
transmit a warning signal indicating the measured temperature or abnormality to an outside of the water pressure sensor device in a case that the measured temperature is equal to or greater than a predetermined temperature.

7. A water level gauge comprising:
a first communicator configured to receive a first wireless signal indicating an absolute value of water pressure from a water pressure sensor device capable of measuring the absolute value of the water pressure; and
a water level calculator configured to calculate a water level on the basis of the absolute value of the water pressure indicated by the first wireless signal received by the first communicator and an atmospheric pressure measured by a barometer.

8. The water level gauge according to Claim 7, further comprising:
a second communicator configured to transmit a second wireless signal indicating the water level calculated by the water level calculator to an outside of the water level gauge.

9. The water level gauge according to Claim 7 or Claim 8, wherein
the water level calculator is configured to calculate the water level on the basis of a difference between the absolute value of the water pressure and the atmospheric pressure, and a water density of water which is measurement target.

10. The water level gauge according to any one of Claims 7 to 9, wherein
the first communicator is configured to receive, from each of a plurality of water pressure sensor devices, the first wireless signal and identification information for identifying each of the plurality of water pressure sensor devices, and
the water level calculator is configured to calculate the water level for each identification information.

11. A water level measurement system comprising:
at least one water pressure sensor device according to any one of Claims 1 to 6:
a barometer configured to measure an atmospheric pressure; and
a water level gauge connected to the water pressure sensor device wirelessly and connected to the barometer wirelessly or by wire,
wherein the water level gauge is configured to calculate a water level on the basis of the absolute value of the water pressure indicated by the first wireless signal acquired from the water pressure sensor device wirelessly and the atmospheric pressure acquired from the barometer wirelessly or by wire.

12. The water level measurement system according to Claim 11, further comprising:
an information processing device configured to transmit and receive information to and from the water level gauge via a network, the information processing device comprising a controller configured to input an alarm into an external device in a case that the water level acquired from the water level gauge via the network exceeds a predetermined value.

13. The water level measurement system according to Claim 11 or Claim 12, wherein
the water level gauge is configured to transmit a second wireless signal indicating the calculated water level to an outside of the water level gauge.

14. The water level measurement system according to any of Claims 11 to 13, wherein
the water level gauge is configured to calculate the water level on the basis of a difference between the absolute value of the water pressure and the atmospheric pressure, and a water density of water which is measurement target.

15. The water level measurement system according to any one of Claims 11 to 14, wherein
the water level gauge is configured to:
receive, from each of a plurality of water pressure sensor devices, the first wireless signal and identification information for identifying each of the plurality of water pressure sensor devices; and
calculate the water level for each identification information.
